# EUROPÄISCHE PATENTSCHRIFT

(11) **EP 1 330 915 B1**
(45) Veröffentlichungstag und Bekanntmachung des Hinweises auf die Patenterteilung: **24.10.2007**
(21) Anmeldenummer: 01954003.8
(22) Anmeldetag: 03.07.2001
(51) Int. Cl.: H04M 15/28, H04M 15/00

(54) **SYSTEM ZUR VORAB-TARIFINFORMATION FÜR TELEKOMMUNIKATIONSVERBINDUNGEN**
PRELIMINARY TARIFF INFORMATION SYSTEM FOR TELECOMMUNICATION CONNECTIONS
SYSTEME D'INFORMATION DE TARIF PREALABLE DESTINE A DES TELECOMMUNICATIONS

(30) Priorität: 11.08.2000 DE 10039285
(43) Veröffentlichungstag der Anmeldung: 30.07.2003
(73) Patentinhaber: Deutsche Telekom AG, 53113 Bonn (DE)
(72) Erfinder: LOOS, Jürgen, 48599 Gronau (DE)
(86) Internationale Anmeldenummer: PCT/EP2001/007581
(87) Internationale Veröffentlichungsnummer: WO 2002/015553

(56) Entgegenhaltungen:
- WO-A-94/28670
- US-A- 5 937 045

## Beschreibung

Die Erfindung betrifft den Bereich der Telekommunikation gemäß dem Oberbegriff des Anspruchs 1.

Bei fast allen Geschäften hat ein Kunde die einfache Möglichkeit, vor Vertragsabschluß eine Information über den Preis der Ware oder der Dienstleistung vom Anbieter zu erhalten.

Im Bereich der Telekommunikationstarife ist das relativ umständlich. Die Angebote sind vielfältig, schwer durchschaubar und ständig Änderungen unterworfen. Der Kunde muß sich über Printmedien oder andere Quellen informieren. Hierbei ist er jedoch nicht sicher, ob die Informationen noch aktuell oder wirklich richtig sind.

Verbindliche Informationen zu einer konkreten Verbindung bekommt man nur durch separate Anfrage beim Telekommunikationsanbieter selber oder einem speziellen Dienstleister. Dieses geschieht bekannterweise durch eine persönliche Abfrage bei den Tarif-Hotlines der Telekommunikationsanbieter.

Aufgabe der Erfindung ist es, ein System zur Vorab-Tarifinformation für Telekommunikationsverbindungen zu schaffen, bei dem vor Zustandekommen einer Telekommunikationsverbindung eine aktuelle und richtige Tarifinformation vom Anbieter gegeben wird. Hierbei wird auf die bereits bekannten Druckschriften WO 94/28670 und US 5937045 verwiesen.

Diese Aufgabe wird durch ein System zur Vorab-Tarifinformation für Telekommunikationsverbindungen mit den Merkmalen des Anspruchs 1 gelöst, das heißt, daß nach Eingabe der Zielvorwahl vor Zustandekommen der Verbindung eine Tarifinformation in Form von elektrischen Daten, Sprache, oder akustischen Signalen an den Nutzer gesendet wird.

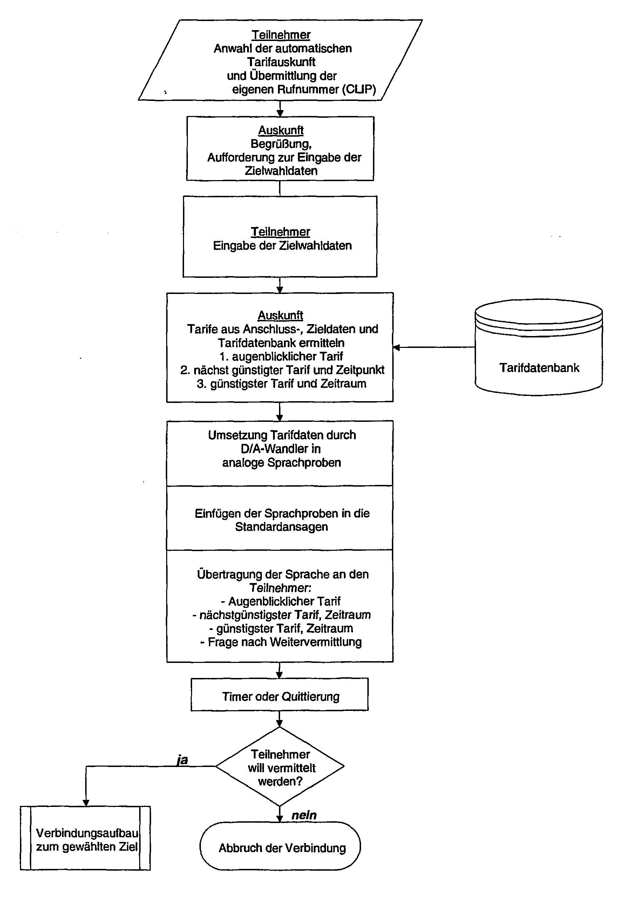

Die Erfindung soll anhand von zwei Ausführungsbeispielen näher erläutert werden. Die Zeichnung zeigt in einem Schema die Programmabläufe beim Dienstleistungsanbieter.

Das Dienstleistungsmerkmal "Vorab-Tarifinformation" wird technisch von Telekommunikationsanbietern im "Call by Call"- oder im "Pre-Switched"-Verfahren angeboten.
Möchte der Nutzer vor Zustandekommen einer "Call by Call"-Telekommunikationsverbindung über den betreffenden Tarif informiert werden, wird vor Eingabe der Zielvorwahl ein Tarif-Anforderungscode, z.B. *11# gewählt. Der Telekommunikationsanbieter wertet daraufhin diesen Anforderungswunsch aus und sendet vor dem Rufton / Freizeichen die aktuelle Tarif-Information z.B. in Form einer sprachlichen Mitteilung an den Nutzer.
Diese Mitteilung kann in der Art erfolgen: "Ihre gewählte Verbindung nach München kostet 0,2 EURO pro Minute". Der Nutzer kann nunmehr entscheiden, ob er mit diesem Tarif die Telekommunikationsverbindung zustande kommen lassen will, indem er die Zielrufnummer eingibt, oder die Verbindung durch Auflegen trennt.

Hat der Nutzer einen Telekommunikationsanbieter fest gewählt (Pre-Switehed) und möchte für einen definierten Benutzerzeitraum oder bis auf Widerruf vor Zustandekommen einer Telekommunikationsverbindung den aktuellen Tarif genannt bekommen, teilt er dies dem Telekommunikationsanbieter mit. Ab sofort wählt der Nutzer lediglich die gewünschte Zielvorwahl und der Telekommunikationsanbieter wertet unaufgefordert die Verbindungsdaten aus und sendet vor Zustandekommen der Verbindung die Tarifinformation an den Nutzer. Dies kann in Form von Daten geschehen, die auf dem Display des Telefones angezeigt werden bzw. als sprachliche Mitteilung in der Form "Die gewählte Verbindung nach München kostet 2 Euro pro Minute" erfolgen. Der Nutzer kann nunmehr entscheiden, ob er mit diesem Tarif die Telekommunikationsverbindung zustande kommen lassen will, indem er die vollständige Zielrufnummer wählt oder die Verbindung durch Auflegen trennt.

Es ist im Sinne der Erfindung, dem Nutzer neben dem augenblicklichen Tarif den nächstgünstigen Tarif (Zeitpunkt und Betrag) und / oder den günstigsten Tarif zu nennen. Der Nutzer kann die Ansagen durch Eingabe der Zielrufnummer oder durch Auflegen unterbrechen.

Es ist in beiden Ausführungsbeispielen denkbar, daß die übermittelte Tarifinformation in einem angeschlossenen Computer zur reinen Gebührenerfassung oder zur Wahl der günstigsten Telekommunikationsverbindung weiterverarbeitet werden kann.

Vorteilhaft bei diesem System ist, daß der Nutzer vor Zustandekommen der Telekommunikationsverbindung einen konkreten Hinweis zur Tarifierung dieser Verbindung erhält und durch die Kenntnis der Tarifierung über die Fortführung der Verbindung zu der gewählten Rufnummer entscheiden kann.
Der Nutzer braucht keine umfangreichen Recherchen zur Tarifierung durchzuführen und ist sicher, daß er zur beabsichtigten Telekommunikationsverbindung nur die aktuellen Tarife genannt bekommt.

## Patentansprüche

1. System zur Vorab-Tarifinformation für Telekomniunikationsverbindungen, bei dem durch Eingabe von MFV-Codes Dienstleistungsmerkmale angefordert und für eine gewählte Zielrufnummer die Tarife ermittelt und mitgeteilt werden, wobei das System so ausgestaltet ist, dass einem Telekommunikationsanbieter der Wunsch nach Tarifinformationen mitgeteilt wird und eine Tarifinformation in Form von elektrischen Daten, Sprache, oder akustischen Signalen an den Nutzer gesendet wird,
**dadurch gekennzeichnet, dass** das System so ausgestaltet ist, dass
die Tarifinformation nach Eingabe lediglich einer Zielvorwahl und vor Zustandekommen der Telekommunikationsverbindung an den Nutzer gesendet wird und der Nutzer anhand dieser Information über das Zustandekommen der Telekommunikationsverbindung zu den übermittelten Tarifen durch Wahl der vollständigen Zielrufnummer oder Auflegen entscheidet.

2. System nach Anspruch 1, **dadurch gekennzeichnet**, das System so ausgestaltet ist, dass dem Telekommunikationsanbieter der Wunsch nach Tarifinformationen bei "Call by Call"-Verbindurigen über einen Tarifanforderungscode oder bei fester Voreinstellung "Pre-Switched" des Telekommunikationsanbieters der Wunsch nach Tarifinformationen einmalig mitgeteilt wird.

## Claims

1. System for advance rate information for telecommunications connections, wherein service attributes are requested through entry of DTMF codes and the rates for a dialed destination number are determined and communicated, wherein the system is designed such that the desire for rate information is communicated to a telecommunications service provider and a rate information message in the form of electrical data, voice, or audible signals is transmitted to the user, **characterized in that** the system is designed such that the rate information is transmitted to the user after only a destination area code has been dialed and before the telecommunications connection has been established, and the user decides, on the basis of this information, whether or not to establish the telecommunications connection at the communicated rates by dialing the complete destination number or hanging up.

2. System according to claim 1, **characterized in that** the system is designed such that in the case of "call by call" connections, the desire for rate information is communicated to the telecommunications service provider by means of a rate request code, or in the case of a fixed advance setting of "pre-switched," the desire for rate information is communicated to the telecommunications service provider a single time.

## Revendications

1. Système d'information préalable sur les tarifs de liaisons de télécommunications, permettant de demander des fonctions de service en entrant des codes MFV et de déterminer et de communiquer les tarifs pour un numéro appelé composé, le système étant réalisé de telle manière qu'un opérateur de télécommunications est informé du souhait d'obtenir des informations tarifaires, et une information tarifaire est envoyée à l'utilisateur sous forme vocale, de données électriques ou de signaux sonores, **caractérisé en ce que** le système est réalisé de telle manière que l'information tarifaire est envoyée à l'utilisateur après la seule entrée d'un indicatif de destination et avant l'établissement de la liaison de télécommunications, et **en ce que** l'utilisateur décide, moyennant ladite information, d'établir la liaison de télécommunications aux tarifs communiqués en composant le numéro appelé complet ou de raccrocher.

2. Système selon la revendication 1, **caractérisé en ce que** le système est réalisé de telle manière que dans le cas des communications « call by call », le souhait d'obtenir des informations tarifaires est communiqué à l'opérateur de télécommunications moyennant un code de demande de tarification et que dans le cas d'une présélection fixe de l'opérateur de télécommunications, le souhait d'obtenir des informations tarifaires est communiqué une seule fois.
